(19) Europäisches Patentamt

European Patent Office

Office européen des brevets

(11) **EP 0 674 792 B1**

(12) **EUROPEAN PATENT SPECIFICATION**

(45) Date of publication and mention
of the grant of the patent:
**23.04.1997 Bulletin 1997/17**

(21) Application number: **94902070.5**

(22) Date of filing: **13.12.1993**

(51) Int Cl.6: **G06F 15/80**

(86) International application number:
**PCT/GB93/02540**

(87) International publication number:
**WO 94/14134 (23.06.1994 Gazette 1994/14)**

(54) **NEURAL NETWORK ARCHITECTURE**

NEURONALE NETZWERK ARCHITEKTUR

ARCHITECTURE DE RESEAU NEURONAL

(84) Designated Contracting States:
**DE FR GB IT**

(30) Priority: **16.12.1992 GB 9226192**

(43) Date of publication of application:
**04.10.1995 Bulletin 1995/40**

(73) Proprietors:
- **UNIVERSITY COLLEGE LONDON
London WC1E 6BT (GB)**
- **KING'S COLLEGE LONDON
London WC2R 2LS (GB)**

(72) Inventor: **CLARKSON, Trevor, Grant
London SE13 5EZ (GB)**

(74) Representative: **Boon, Graham Anthony et al
Elkington and Fife,
Prospect House,
8 Pembroke Road
Sevenoaks, Kent TN13 1XR (GB)**

(56) References cited:
- **IEEE TRANSACTIONS ON COMPUTERS vol. 41,
no. 12 , 1 December 1992 , NEW YORK US pages
1552 - 1561 CLARKSON 'Learning probabilistic
RAM nets using VLSI structures'**
- **PROCEEDINGS 2ND INTERNATIONAL
CONFERENCE ON MICROELECTRONICS FOR
NEURAL NETWORKS October 1991 , MUNCHEN
, GERMANY pages 183 - 191 CLARKSON 'A
hybrid serial/parallel architecture for learning
ram-based neural networks' cited in the
application**

## Description

This invention relates to an architecture for use in constructing artificial neural networks. Such networks comprise a plurality of artificial neuron-like devices, hereinafter referred to simply, as "neurons". The invention is particularly intended for use with a particular type of neuron known as a pRAM, and by way of introduction a brief discussion is given below of the construction and operation of a pRAM. However, it must be understood that the invention is of general application to the architecture of neural networks, and is not restricted to those where the neurons are pRAMs.

One of the known ways of realising a neuron in practice is to use a random access memory (RAM). The use of RAMs for this purpose dates back a considerable number of years. It has been suggested that if one were able to construct a RAM in which a given output, say a '1', was produced by a given storage location with a probability between 0 and 1 (rather than with a probability of either 0 or 1 as in a conventional RAM), such a RAM would have a potential for constructing neural networks which mimicked more closely than hitherto the behaviour of physiological networks. (See Gorse, D., and Taylor, J.G., 1988, Phys. Lett. A. 131, 326-332; Gorse, D., and Taylor, J.G., 1989, Physica D, 34, 90-114). The term "pRAM", an abbreviation for "probabilistic RAM", is used there and herein for a RAM in which a given output is produced with a given probability between 0 and 1 when a particular storage location in the RAM in addressed, rather than with a probability of either 0 or 1 as in a conventional RAM.

In our prepublished International Patent Applications Nos. WO92/00572 and WO92/00573, and in a paper entitled "Hardware realisable models of neural processing", published in Proceedings of the First IEE International Conference on Artificial Neural Networks, 1989, pp 242-246 there is a description of how a pRAM may be constructed. There is described a device for use in a neural processing network, comprising a memory having a plurality of storage locations at each of which a number representing a probability is stored; means for selectively addressing each of the storage locations to cause the contents of the location to be read to an input of a comparator; a noise generator for inputting to the comparator a random number representing noise; and means for causing to appear at an output of the comparator an output signal having a first or second value depending on the values of the numbers received from the addressed storage location and the noise generator, the probability of the output signal having a given one of the first and second values being determined by the number at the addressed location.

One way in which a pRAM may be constructed is using a VLSI chip. However, such chips are relatively expensive, and it is presently impractical to fit more than one pRAM, or at most a few pRAMs, on to a single chip, given the substantial chip area which is required for the memory storage of each pRAM, its random number generator and the comparator. Neural networks of practical interest generally comprise a large number of neurons, so that using this approach a large number of VLSI chips would be required, with consequent high cost. The problem is accentuated when the neurons are provided with a learning capability, since that further increases the size of the neuron.

In our copending International Patent Application WO-A-93/00653 (published on 7.1.93) there is described an architecture which makes it possible to construct a neural network involving a substantial number of neurons, using VLSI chips, but in such a way as to reduce the cost significantly. The architecture concerned also has the potential for a high degree of flexibility in the connectivity of the neurons. Details of the architecture are also to be found in the following papers:

"A Serial Update VLSI Architecture for the Learning Probabilistic RAM Neuron", Clarkson T G, Ng C K, Gorse D, Taylor J G, Proceedings of ICANN91 Conference, Helsinki, 1573-1576, 24-28 June 1991.

"A Hybrid Serial/Parallel Architecture for Learning RAM-based Neural Networks", Clarkson T G and Ng C K, Proc. 2nd International Conference on Microelectronics for Neural Networks, Munich, 183-191, 16-18 October 1991, Kyril & Method Verlag (Munich).

"A Probabilistic RAM Controller with Local Reinforcement Learning", Ng C K and Clarkson T G, IJCNN '91 Conference, Singapore, 1891-1897, 18-21 November 1991.

WO-A-93/00653 describes a neural network unit having a plurality of neurons, for example pRAMs, which network comprises a memory providing a plurality of storage locations for each of the neurons, and, in an integrated circuit, for example a VLSI chip, means for defining an algorithm for the operation of the neurons and a control unit for causing the neurons to produce outputs on the basis of data stored in the said storage locations and the said algorithm. The integrated circuit could be distinct from the said memory, or a single chip could provide both.

In the architecture described in WO-A-93/00653, the integrated circuit (or the said memory) contains an output list which holds the current outputs of the neurons, and a further output list which holds the previous outputs of the neurons and the previous outputs of the neurons in any other neural network units to which it may be connected. A connection pointers table is held either on the said integrated circuit or in the said memory, defining which neuron outputs or external inputs are connected to which neuron inputs. Preferably the neural network unit has at least one expansion port, and more preferably a plurality of expansion ports, for example four such ports, permitting the unit to be connected to at least one, and preferably a plurality, of other such units.

WO-A-93/00653 describes various types of learning which may be employed. A neural network unit as specified in the precharacterising part of Claim 1 is disclosed in IEEE Transactions on Computers, vol. 41, no.12, December 1992, New York. It is an object of the invention to provide a modification to the architecture which will enhance the learning performance of the neural network.

According to the present invention there is provided a neural network unit having a plurality of neurons, which unit comprises a memory providing a plurality of storage locations for each of the neurons, and, in an integrated circuit, means for defining an algorithm for the operation of the neurons, means for defining a learning algorithm by which the neurons can undergo a learning process using reward and penalty signals, and control means for causing the neurons to be processed sequentially to produce an output on the basis of data stored in the said storage locations and the said algorithm, the neural network unit further comprising an array of connection pointers defining which neuron outputs or external inputs are connected to which neuron inputs, characterised in that said array of connection pointers also defines what reward and/or penalty signal is applied to each of the neurons, and characterised by a vector cache for storing addresses generated during one pass of the unit, for use in a second learning pass, each said address consisting of the bits applied to the inputs of the unit.

Where the present application also provides a way of dealing with networks which have cross-coupled node connections, for every cross-coupled node connection there is provided a dummy node, which can be a virtual node, which receives as an input an output from the node to be processed first, and has its output connected to an input of the node to be processed second, to which it provides an input identical to the input which it itself received.

In the accompanying drawings:

Figure 1 shows an embodiment of the invention in block diagram form;
Figure 2 shows in more detail some of the features of Figure 1;
Figure 3 shows how a number of modules according to the invention may be connected to one another; and
Figures 4a and 4b show respectively a pair of cross-coupled pRAMs cross-coupled in an conventional way, and a pair of cross-coupled pRAMs cross-coupled via a 'dummy' pRAM.

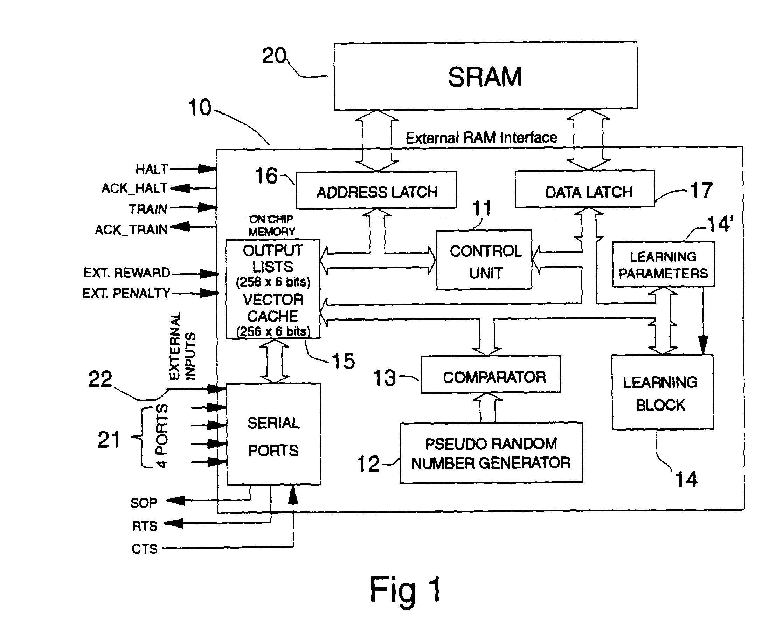

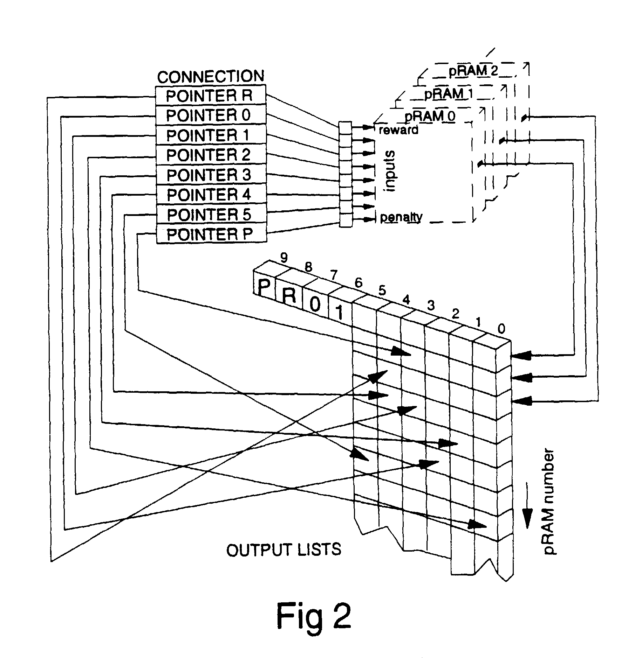

The embodiment which will now be described with reference to Figures 1 and 2 is a module which provides 256 pRAMs, though some other number could be provided instead. The hardware for the module takes the form of a single VLSI chip 10 and a conventional static RAM 20, with appropriate connection between the two and provision for connection to other modules and/or to external inputs. The VLSI chip 10 comprises a control unit 11, a pseudo random number generator 12, a comparator 13, a learning block 14 with connections to receive, inter alia, learning parameters held in a store 14', a memory 15, and address and data latches 16 and 17 via which the chip 10 is connected to a static RAM 20.

Typically, the learning block holds a learning rule such as:

$$\Delta\alpha_{\underline{u}}(t) = \rho((a - \alpha_{\underline{u}})r + \lambda(a - \alpha_{\underline{u}})\, p\,)\,(t).\delta\,(\underline{u} - \underline{i}(t))$$

where r(t), p(t) are global success, failure signals $\varepsilon$ {0,1} received from the environment at time t, the environmental response might itself be produced by a pRAM, though it might be produced by many other things. a(t) is the pRAM's binary output, and p, $\lambda$ are constants $\varepsilon[0,1]$. The delta function is included to make it clear that only the location which is actually addressed at time t is available to be modified, the contents of the other locations being unconnected with the behaviour that led to reward or punishment at time t. In the case of this rule, the store 14' hold the parameters $\rho$ and $\rho\lambda$. These may be constant or they may vary with time to improve convergence.

The pRAMs, of which three of the 256 are shown in Figure 2, are shown in that Figure as though each were a discrete physical entity, but, as will be apparent from the ensuing description, each is in fact a virtual pRAM. The storage locations for all the pRAMs are in the RAM 20, and the pseudo random number generator, comparator and learning block held on the VLSI serve successively as those components of each pRAM. Figure 2 shows the pRAMs as being 6-pRAMs, i.e. pRAMs each of which has six address inputs and thus $2^6 = 64$ addresses. Although there is no particular significance in the pRAMs being 6-pRAMs it will be convenient below to refer to these by way of example.

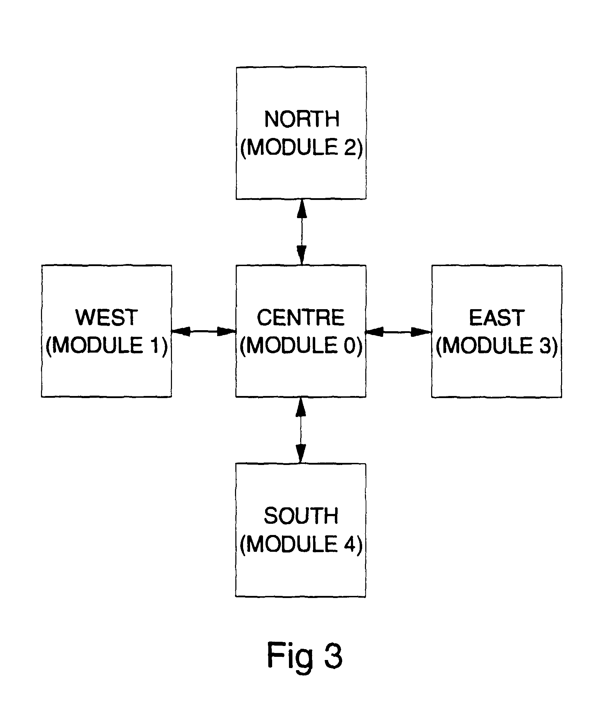

The current output (0 or 1) of each pRAM of the module in question (regarded as module 0) is stored in column 0 of what is referred to here as an output list which is part of the VLSI memory 15. Columns 1 to 4 hold the current values of the outputs of four other modules 1 to 4 to which the module in question is connected (see Figure 3). The description of this embodiment is on the basis that the module in question is connected to four other modules, but it must be understood that it might be connected to a greater or lesser number of modules, or to no other modules. In the described embodiment the module has a single output port connected to all of its neighbours, and four serial input ports each connected to a respective neighbour. These ports are denoted by reference numeral 21.

Column 5 hold the current values of up to 256 external inputs which are input serially to the module by a fifth serial port 22. This serial input port operates in the same way as the aforementioned four serial ports, and it may optionally be used as a fifth input port to increase the number of modules to which the module in question may be concerned.

The connectivity of each pRAM is specified by associating each of the six address inputs of the pRAM with a respective one of the six connection pointers 0 to 5. The pointers can be held either in RAM 20 or on chip 10, preferably the former. These pointers indicate, inter alia, from which pRAM in which module (or from which external source) the input concerned is to be taken. Thus, in the illustrated example the connection pointers denote the fact that the inputs to the pRAM 0 are taken from pRAM 5 in module 2, pRAM 3 in module 3, pRAM 7 in module 0, pRAM 4 in module 1, pRAM 3 in module 4, and an external input with address 5 respectively.

Unlike the situation in WO-A-93/00653, the system does not use a pair of output lists, namely an "Old" output list consisting of five columns which contain the outputs of the module concerned, and those of the four modules to which it is connected, for the previous time step, and a "New" output list which holds the current pRAM outputs of the module concerned, as they are being generated.

Instead, there is only a "New" output list. The "Old" output list is able to be omitted by ensuring that the pRAMs are processed in an appropriate order, beginning with those in the input layer of the network, continuing, in order, with those in any hidden layers, and finishing with those in the output layer. The problem which would otherwise arise where pairs of pRAMs are cross-coupled is dealt with using "dummy" pRAMs, a feature described in detail below. All modules are processed synchronously. Thus, the pRAMs 0 in all modules are processed at the same time, then all pRAMs 1, and so forth.

Apart from the omission of the "Old" output list, the architecture thus far described is substantially the same as that described in WO-A-93/00653. However, at this point a number of differences need to be explained. Firstly, it will be noted that Figure 1 herein shows that the on-chip memory 15 includes a vector cache consisting of 256 x 6 bits. This is to facilitate global learning, and the reason for it is as follows.

For global learning, the total state of the network must be known before the appropriate reward or penalty signal is determined and applied. This gives rise to a two-pass process. The first pass calculates the new output state for each of the 256 pRAMS, from the input layer first through to the output pRAMs. After each layer is processed, the outputs are handed immediately to the following layer for processing within the first pass. The reward and penalty signals are determined by an external environment, and these signals are applied to each pRAM during the second pass. The previous state of the network, which caused the present output, must be used in a reward/penalty reinforcement learning rule. This state could be re-created by fetching all connection pointers once more and forming the input vector for each neuron from the Output List as in the first pass. Indeed, this would have to be done tp implement global learning using what is described in WO-A-93/00653. However, this halves the potential performance of the module. Instead, in the architecture shown in Figure 1 herein, the input vectors determined on the first pass are held in a cache and are used on the second, learning pass. In this way, extra on-chip RAM is used in order to maintain the performance of the device.

A further difference from what is described in WO-A-93/00653 is to be seen in the connection pointers illustrated in Figure 2. In addition to the pointers 0 to 5, whose function has already been described, there are connection pointers R and P which direct how the reward and penalty signals r and p are to be applied. Thus, in the example illustrated, connection pointer P applies the value of the output of pRAM 1 in module 4, as stored in the Output List, as the penalty signal to the pRAM being processed, and connection pointer R applies the value of the output of pRAM 2 in module 4, as stored in the Output List, as the reward signal to the pRAM being processed. Using, as the penalty and reward signals for a pRAM the output of other pRAMs could represent a form of competitive learning. If global learning is desired, the connection pointers point to the pins where the global reward and penalty signals are applied, and connection pointers for this purpose are included in a list given hereinafter.

The steps which take place in one way of operating the module described above are as follows:

(1) Generate an input vector $\underline{u}$ for the first of the pRAMs on the basis of the connection pointers for that pRAM, as stored in the connection pointers table. The control unit 11 transforms the vector $\underline{u}$ into the corresponding address for the RAM 20, at which address the contents of the storage location are denoted as $\alpha_u$.

(2) Latch the contents of the addressed register into the data latch.

(3) Compare the data in the data latch with a random number produced by the generator 12 to produce a new output, a, (0 or 1) for the pRAM.

(4) Store the output a in column 0 of the output list in the row relating to the pRAM, and send output a to the four neighbouring modules via the serial output port.

(5) Repeat steps (1) to (4) for each pRAM in turn until all pRAMs in the module have been processed.

(6) According to the reward-penalty algorithm, process each pRAM in turn using the newly-generated outputs and the signals r and p from the environment to calculate new values for the memory contents of the pRAMs, (this is carried out by the learning block 14) and write the new values back to the corresponding memory locations of the pRAM. In this step, the vector cache in the memory 15 is used to determine the input vectors $\underline{u}$ which are to be employed.

The above process is executed on each of the modules synchronously and respectively.

Step (6) above refers to a form of reinforcement training known as global reward/penalty learning, in which the contents of at least one of the storage locations in the neuron (in this case a pRAM) are altered on the basis of signals from the environment signifying success or failure of the network as a whole (the reward and penalty signals, r and p). Suitable algorithms for carrying out such reinforcement training are described in the International Patent Applications mentioned above and in a paper entitled "Reinforcement training strategies for probabilistic RAMS" by D. Gorse and J.G. Taylor in: Proceedings of Euronet '90, Prague, September 1990, pp 98-100.

The connection pointers used in the architecture of Figures 1 to 3 each consist of twelve bits. Bits 0 to 7 specify which of the pRAMs 0 to 255 is being accessed. Bits 8 to 11 specify the following data sources:

| Bit | | | | |
|---|---|---|---|---|
| 8 | 9 | 10 | 11 | Data Source |
| 0 | 0 | 0 | 0 | Same chip |
| 1 | 0 | 0 | 0 | North chip |
| 0 | 1 | 0 | 0 | East chip |
| 1 | 1 | 0 | 0 | South chip |
| 0 | 0 | 1 | 0 | West chip |
| 1 | 0 | 1 | 0 | External inputs |
| 0 | 1 | 1 | 0 | Vdd for permanent logic '1' |
| 1 | 1 | 1 | 0 | Ground for permanent logic '0' |
| 0 | 0 | 0 | 1 | Global reward pin |
| 1 | 0 | 0 | 1 | Global penalty pin |

The usefulness of being able to specify permanent logic '0' or permanent logic '1' arises particularly when a pRAM has, say, 6 inputs, but only, say 4 inputs are connected to receive data from another pRAM or an external source. In that case the two unused inputs could be tied to '0' or '1' by specifying the data sources for permanent '0' or permanent '1' respectively. When bits 8 to 11 are used in accordance with the above table to specify columns 6 to 9 of the output lists, bits 1 to 7 are ignored, that is they assume a "don't care" state.

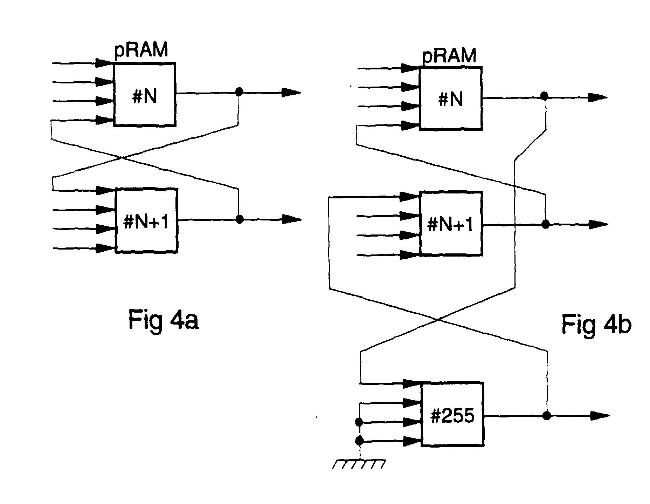

As mentioned above, one problem addressed herein is that which arises when the network has cross-coupled connections. If connections are made between pRAMs in the same layer, it can normally be arranged that the pRAMs whose outputs are required to be connected within the same layer, are processed before those pRAMs who receive such outputs on their input lines. However, if a form of cross-coupled connection is used, this condition can never be satisfied. This is shown in Figure 4a. In Figure 4a, pRAM N+1 depends upon the output of pRAM N. During processing at time t, the pRAMs assume that the inputs are those asserted at time t-1. However, owing to the serial processing operation, pRAM N+1 receives an input from pRAM N which was formed during time t, which violates the previous assumption.

This can be overcome as shown in Figure 4b, by using pRAM 255 (in this example) which stores the state of pRAM N at time t-1. pRAM N+1 is therefore connected to pRAM 255 instead of pRAM N in order to receive the state of pRAM N at time t-1. In effect, pRAM 255 acts as a 'dummy' pRAM which stores the output state of one of the pRAMs and thus allows all the conditions concerning the order of processing to be met. The 'dummy' pRAM is one of the 256 pRAMs from the module which has its memory contents set either 11111111B or 00000000B. The 11111111B memory location is accessed when an input vector 1 is received and the 00000000B location is accessed whenever an input vector of O is received. In this way the pRAM always responds with a 1 or 0 respectively. This pRAM acts as a single delay element and is assigned a high pRAM number such that it is processed last (Figure 4). A separate 'dummy' pRAM is needed for each cross-coupled connection in the network.

For completeness, reference will now be made to some further input and output signals which are shown in Figure 1. Their presence is, however, implicit in what is described above. The signals are there to enable the chip to work with external devices and in multi-module systems. HALT is an input which halts the chip at the end of a pass. Since the chip might be in the middle of a pass when HALT is asserted, ACK_HALT is used to signal when the chip has completed the pass and is now halted. At this point, an external device (e.g. a computer) can take control of the RAM interface and can read or write the RAM memory (weights or connection table) or can change the internal registers which set the learning rates ($\rho$ or $\lambda$). TRAIN is an input which, when asserted, sets the chip into the training mode. Since the chip might be in the middle of a pass when TRAIN is asserted, ACK_TRAIN is used to signal when the chip has completed the pass and is now in the training mode.

SOP is a serial output which outputs the new pRAM states and may be connected to the ports of other pRAM modules. RTS and CTS are Ready To Send and Clear To Send respectively. These handshaking signals synchronise the transfer of pRAM data between modules. All pRAM modules should operate synchronously, but one pRAM module might skip a clock cycle, for example, since there are separate clock dividers in each module. This would allow modules to get out of phase with each other. Each time a new pRAM output is produced in a multi-module system, each module asserts RTS. All RTS outputs are connected together (wired-OR) and are connected to the CTS input of every module. All modules wait until the last RTS is asserted before continuing processing. In this way, the modules keep in step with each other.

## Claims

1. A neural network unit having a plurality of neurons, which unit comprises a memory (20) providing a plurality of storage locations for each of the neurons, and, in an integrated circuit (10), means (11,12,13,15) for defining an algorithm for the operation of the neurons, means (14,14') for defining a learning algorithm by which the neurons can undergo a learning process using reward and penalty signals, and control means (11,16,17) for causing the neurons to be processed sequentially to produce an output on the basis of data stored in the said storage locations and the said algorithm, the neural network unit further comprising an array of connection pointers defining which neuron outputs or external inputs are connected to which neuron inputs, characterised in that said array of connection pointers also defines what reward and/or penalty signal is applied to each of the neurons, and characterised by a vector cache for storing addresses generated during one pass of the unit, for use in a second learning pass, each said address consisting of the bits applied to the inputs of the unit.

2. A unit according to claim 1, wherein the array of connection pointers is held in the said memory.

3. A unit according to claim 1, wherein the array of connection pointers is held in the said integrated circuit.

4. A unit according to any preceding claim, wherein the means defining the neuron algorithm comprises a random number generator (12) and a comparator (13) for comparing the contents of the storage locations with random numbers produced by the said random number generator, the comparator having an output at which appears a signal having a first or second value depending on the result of the comparison, the comparator outputs constituting the said neuron outputs.

5. A unit according to any preceding claim, wherein at least one of the neurons has less than all of its inputs connected to receive data from other neuron outputs or external inputs, and each input not so connected is associated by means of a connection pointer with an input providing permanent logic '0' or permanent logic '1'.

6. A unit according to any preceding claim, wherein the vector cache is on the integrated circuit.

7. A unit according to any preceding claim, which has cross-coupled connections between at least some of the neurons, and wherein for every cross-coupled connection there is provided a dummy neuron which receives as an input an output from the neuron to be processed first, and has its output connected to an input of the neuron to be processed second, to which it provides an input identical to the input which it itself received.

8. A unit according to any preceding claim, provided with at least one expansion port (21) adapted to permit connection of the unit to at least one other such unit.

9. An array of a plurality of units each according to claim 8, the units being interconnected via the said expansion ports.

## Patentansprüche

1. Einheit eines neuronalen Netzwerks mit einer Mehrzahl von Neuronen, wobei die Einheit aufweist, einen Speicher (20) in einem integrierten Schaltkreis (10), der eine Mehrzahl von Speicherstellen für jedes der Neuronen zur Verfügung stellt. Mittel (11, 12, 13, 15) zur Definition eines Algorithmus zum Betrieb der Neuronen, Mittel (14, 14') zur Definition eines Lernalgorithmus, durch den die Neuronen durch die Verwendung von Belohnungs- und Strafsignalen einem Lernprozeß unterziehbar sind, und Steuerungsmittel (11, 16, 17), durch die die Neuronen sequen-

EP 0 674 792 B1

tiell zur Erzeugung einer Ausgabe auf Basis der in den Speicherstellen gespeicherten Daten und des Algorithmus verarbeitet werden, wobei das neuronale Netzwerk ferner eine Anordnung von Verbindungs-Pointern aufweist, die definiert, welche Neuronen-Outputs oder externen Inputs mit welchen Neuronen-Inputs verbunden sind, dadurch gekennzeichnet, daß die Anordnung von Verbindungs-Pointern darüberhinaus auch definiert, welche Belohnungs- und/oder Strafsignale auf jedes der Neuronen angewandt wird und gekennzeichnet durch einen Vektor-Cache zur Speicherung von Adressen, die während eines Durchlaufs der Einheit erzeugt wurden, zur Verwendung in einem zweiten Lerndurchlauf, wobei jede der Adressen von den Bits gebildet ist, die für die Inputs der Einheit angewendet werden.

2. Einheit nach Anspruch 1, dadurch gekennzeichnet, daß die Anordnung von Verbindungs-Pointern in dem Speicher abgelegt ist.

3. Einheit nach Anspruch 1, dadurch gekennzeichnet, daß die Anordnung von Verbindungs-Pointern in dem integrierten Schaltkreis abgelegt ist.

4. Einheit nach einem der vorangegangenen Ansprüche, dadurch gekennzeichnet, daß die den Neuronenalgorithmus definierenden Mittel einen Zufallszahlengenerator (12) und einen Komparator aufweisen, der die Inhalte der Speicherplätze mit den durch den Zufallszahlengenerator erzeugten Zufallszahlen vergleicht, wobei der Komparator einen Output aufweist, an dem ein Signal erscheint, daß in Abhängigkeit von dem Ergebnis des Versgleichs einen ersten oder einen zweiten Wert einnimmt, und der Komparator die Outputs der Neuronen bestimmt.

5. Einheit nach einem der vorangegangenen Ansprüche, dadurch gekennzeichnet, daß bei zumindest einem der Neuronen ein Teil seiner Inputs angeschlossen ist, um Daten von anderen Neuronen-Outputs oder externen Inputs zu empfangen und jeder nicht derartig angeschlossene Input mittels eines Verbindungs-Pointers mit einem Input, der eine permanente logische "0" oder eine permanente logische "1" erzeugt, verbunden ist.

6. Einheit nach einem der vorangegangenen Ansprüche, dadurch gekennzeichnet, daß der Vektor-Cache auf dem integrierten Schaltkreis angeordnet ist.

7. Einheit nach einem der vorangegangenen Ansprüche, dadurch gekennzeichnet, daß sie über Kreuz angeschlossene Verbindungen zwischen zumindest einigen der Neuronen aufweist, und daß für jede kreuzweise Verbindung ein Dummy-Neuron vorgesehen ist, daß als Input einen Output von dem als erstes abzuarbeitenden Neuron empfängt und dessen Output mit einem Input des als zweites abzuarbeitenden Neurons verbunden ist, an den es einen Input liefert, der mit dem, den es selbst erhalten hat, identisch ist.

8. Einheit nach einem der vorangegangenen Ansprüche, dadurch gekennzeichnet, daß sie mit zumidest einem Expansions-Port (21) verbunden ist, der zur Verbindung der Einheit mit zumindest einer andren, gleichartigen Einheit ausgebildet ist.

9. Anordnung einer Mehrzahl von Einheiten, jede nach Anspruch 8, dadurch gekennzeichnet, daß die Einheiten über die Expansions-Ports miteinander verbunden sind.

**Revendications**

1. Unité de réseau neuronal ayant une pluralité de neurones, laquelle unité comprend une mémoire (20) fournissant une pluralité d'emplacements de stockage pour chacun des neurones, et dans un circuit intégré (10), des moyens (11, 12, 13, 15) pour définir un algorithme pour le fonctionnement des neurones, des moyens (14, 14') pour définir un algorithme d'apprentissage par lequel les neurones peuvent subir un processus d'apprentissage utilisant des signaux de récompense et de pénalité, et des moyens de commande (11, 16, 17) pour provoquer le traitement des neurones en séquence pour produire une sortie sur la base de données stockées dans lesdits emplacements de stockage et ledit algorithme, l'unité de réseau neuronal comprenant en outre une matrice de pointeurs de connexion définissant quelles sorties ou entrées externes de neurones sont connectées à quelles entrées de neurones, et caractérisée en ce que ledit réseau de pointeurs de connexion définit également quel signal de récompense et/ou de pénalité est appliqué à chacun des neurones, et caractérisé par un cache de vecteur pour stocker les adresses générées lors d'un passage de l'unité, pour utilisation dans un deuxième passage d'apprentissage, chaque dite adresse étant constituée des bits appliqués aux entrées de l'unité.

7

**2.** Unité selon la revendication 1, dans laquelle la matrice de pointeurs de connexion est contenue dans ladite mémoire.

**3.** Unité selon la revendication 1, dans laquelle la matrice de pointeurs de connexion est contenue dans ledit circuit intégré.

**4.** Unité selon l'une quelconque des revendications précédentes, dans laquelle les moyens définissant l'algorithme de neurones comprennent un générateur de nombres aléatoires (12) et un comparateur (13) pour comparer le contenu des emplacements de stockage a des nombres aléatoires produits par ledit générateur de nombres aléatoires, le comparateur ayant une sortie à laquelle apparaît un signal ayant une première ou une deuxième valeur, selon le résultat de la comparaison, les sorties du comparateur constituant lesdites sorties de neurones.

**5.** Unité selon l'une quelconque des revendications précédentes, dans laquelle au moins l'un des neurones a mains de la totalité de ses entrées connectées pour recevoir des données provenant d'autres sorties de neurones ou d'entrées externes, et chaque entrée qui n'est pas ainsi connectée est associée au moyen d'un pointeur de connexion à une entrée fournissant un '0' logique permanent ou un '1' logique permanent.

**6.** Unité selon l'une quelconque des revendications précédentes, dans laquelle le cache de vecteur est sur le circuit intégré.

**7.** Unité selon l'une quelconque des revendications précédentes, comportant des connexions à couplage croisé entre au moins certains des neurones et dans laquelle, pour chaque connexion à couplage croisé, est prévu un neurone fictif qui reçoit en tant qu'entrée une sortie provenant du neurone destiné à être traité en premier, et a sa sortie connectée à une entrée du neurone destiné à être traité en deuxième, auquel il fournit une entrée identique à l'entrée qu'il a lui-même reçue.

**8.** Unité selon l'une quelconque des revendications précédentes, pourvue au moins d'un point d'accès d'extension (21) susceptible de permettre la connexion de l'unité au moins à une autre telle unité.

**9.** Matrice d'une pluralité d'unités, chacune selon la revendication 8, les unités étant incerconnectées par l'intermédiaire desdits points d'accès d'extension.

Fig 1

Fig 2

Fig 3

Fig 4a

Fig 4b